# EUROPÄISCHE PATENTSCHRIFT

(11) **EP 3 653 916 B1**
(45) Veröffentlichungstag und Bekanntmachung des Hinweises auf die Patenterteilung: **14.12.2022**
(21) Anmeldenummer: 19203728.1
(22) Anmeldetag: 17.10.2019
(51) Int. Cl.: F16K 11/07, F16K 31/06, H01F 7/08, H01F 7/16, F16C 33/20

(54) **ELEKTROMAGNET UND HYDRAULISCHES VENTIL MIT EINEM ELEKTROMAGNET**
ELECTROMAGNET AND HYDRAULIC VALVE COMPRISING AN ELECTROMAGNET
ÉLECTROAIMANT ET SOUPAPE HYDRAULIQUE DOTÉE D'UN ÉLECTROAIMANT

(30) Priorität: 14.11.2018 DE 102018219429
(43) Veröffentlichungstag der Anmeldung: 20.05.2020
(73) Patentinhaber: Robert Bosch GmbH, 70442 Stuttgart (DE)
(72) Erfinder: Kissner, Matthias, 97816 Lohr (DE)

(56) Entgegenhaltungen:
- DE-A1-102005 051 178
- DE-A1-102012 101 634
- DE-A1-102017 106 476
- US-A1- 2010 127 197
- US-B1- 6 292 077

## Beschreibung

Die Erfindung betrifft einen Elektromagneten mit einem Polrohr und mit einem in einem Hohlraum des Polrohrs mit seiner Mantelfläche gelagerten Magnetanker, der in Richtung einer Mittelachse des Polrohrs linear bewegbar ist, wobei zwischen dem Polrohr und dem Magnetanker eine eine Stoßfuge aufweisende, amagnetische Folie zur Lagerung des Magnetankers eingefügt ist. Derartige Elektromagnete werden insbesondere auch zur Betätigung von Hydraulikventilen verwendet. Die Erfindung bezieht sich auch auf ein hydraulisches Ventil mit einem solchen Elektromagneten.

Es ist bekannt, für die Lagerung des Magnetankers im Polrohr eine Folie oder eine Beschichtung vorzusehen, wobei die Folie oder die Beschichtung amagnetisch sind und zugleich eine für eine technisch einwandfreie Funktion vorteilhafte amagnetische Trennschicht zwischen dem Magnetanker und dem Polrohr darstellen.

Zum Beispiel ist in der DE 43 43 879 A1 geoffenbart, dass der Magnetanker mit einer nichtmagnetischen Beschichtung aus einer Chrom-Nickel-Legierung oder aus einem Kunststoff versehen ist, um ein Kleben am Polrohr zu verhindern. Der Einsatz von bestimmten Chromverbindungen wird als gesundheits- und umweltschädlich eingeschätzt sein und ist deshalb nur noch eingeschränkt möglich.

Aus der DE 102 55 740 A1 ist es bekannt, die Umfangswandung des Hohlraums im Polrohr mit einer Folie aus einem Teflonmaterial (aus PTFE) auszukleiden. Diese Folie bildet ein Gleitlager für den Magnetanker, so dass dieser innerhalb des Polrohrs leicht verschiebbar ist. Der herkömmliche Folienzuschnitt ist rechteckig, so dass die Stoßfuge der zusammengerollten Folie parallel zu einer zur Mittelachse des Polrohrs parallel verlaufenden Mantellinie des Magnetankers verläuft. Das führt zu einem satteldachförmigen Auslauf der an der Stoßfuge aneinanderstoßenden Seiten der Folie im Polrohr und damit zu auf den Magnetanker wirkenden Querkräften.

DE 10 2017 106476 A1 offenbart einen Elektromagnet nach dem Oberbegriff des Anspruchs 1.

Der Erfindung liegt die Aufgabe zugrunde, einen Elektromagneten mit den eingangs angeführten Merkmalen so auszubilden, dass die Lagerung des Magnetankers verbessert ist.

Damit die auf den Magnetanker ausgeübten Querkräfte gering sind, verläuft die Stoßfuge an der Folie erfindungsgemäß abweichend von einer parallel zur Mittelachse des Polrohrs verlaufenden Mantellinie des Magnetankers. Dadurch ergibt sich anliegender Folienauslauf im Polrohr mit einer kreisrunden Form der in das Polrohr eingefügten Folie. Durch die Folie bedingte, auf den Magnetanker wirkende Querkräfte treten nicht auf.

Ein erfindungsgemäßer Elektromagnet kann in verschiedener Weise weiter ausgestaltet werden.

Vorteilhafterweise verläuft die Stoßfuge spiralförmig bezüglich der Mittelachse des Polrohrs. Dann kann die Folie auf einfache Weise in Form eines Parallelogramms mit zwei gegenüberliegenden spitzen Winkeln und zwei gegenüberliegenden stumpfen Winkeln zugeschnitten werden. Abgewickelt ist die in das Polrohr einzusetzende Folie also ein Parallelogramm. Dabei ist es günstig, wenn der spitze Winkel zwischen 35 Grad und 60 Grad beträgt. Die Wahl des Winkels kann dabei von dem Durchmesser des Magnetankers abhängen. Bei kleinerem Durchmesser erscheint ein kleinerer spitzer Winkel als bei einem größeren Durchmesser günstig.

Als nicht erfindungsgemäße amagnetische Trennschicht und als Ankerlagerung zur Anwendung kommende PTFE Folien haben eine Stärke von circa 100 Mikrometer. Die amagnetische Trennschicht bewirkt zwar eine technisch einwandfreie Funktion des Elektromagneten. Sie stellt jedoch zugleich einen Luftspalt dar, der den magnetischen Widerstand im Magnetkreis erhöht und deshalb an sich unerwünscht ist. Ein besonders enger Luftspalt ist und damit eine hohe Effizienz sind möglich, wenn die erfindungsgemäße Folie für die Ankerlagerung aus einem amagnetischen Metall besteht. Metallfolien sind auch bei einer sehr geringen Stärke für die Anwendung noch stabil genug.

Ganz besonders bevorzugt besteht die Folie aus einem amagnetischen Stahl, insbesondere aus einem amagnetischen Edelstahl.

Die Stärke der Metallfolie liegt erfindungsgemäß zwischen 10 Mikrometer und 50 Mikrometer. Damit ist der durch die als amagnetische Trennschicht und Gleitlager für den Magnetanker wirkende Folie bedingte Luftspalt sehr klein. Die Effizienz des Elektromagneten ist sehr hoch. Insbesondere beträgt die Stärke der Folie etwa 30 Mikrometer.

Die erfindungsgemäße Ausbildung eines Elektromagneten ist besonders dann mit großen Vorteilen verbunden, wenn der Elektromagnet ein Proportionalelektromagnet ist, bei dem die Magnetkraft proportional zum durch die Wicklung des Elektromagneten fließenden Strom ist und die Magnetkraft über einen Hubbereich des Magnetankers bei gleichem Strom konstant ist.

Ein erfindungsgemäßer Elektromagnet wird bevorzugt für die Betätigung eines hydraulischen Ventils verwendet, wobei der Hohlraum im Polrohr, in dem sich der Magnetanker bewegt, mit Hydrauliköl gefüllt ist.

Ein Ausführungsbeispiel eines erfindungsgemäßen hydraulischen Ventils mit einem Proportionalelektromagneten ist in der Zeichnung dargestellt. Anhand der Figuren dieser Zeichnung wird die Erfindung nun näher erläutert.

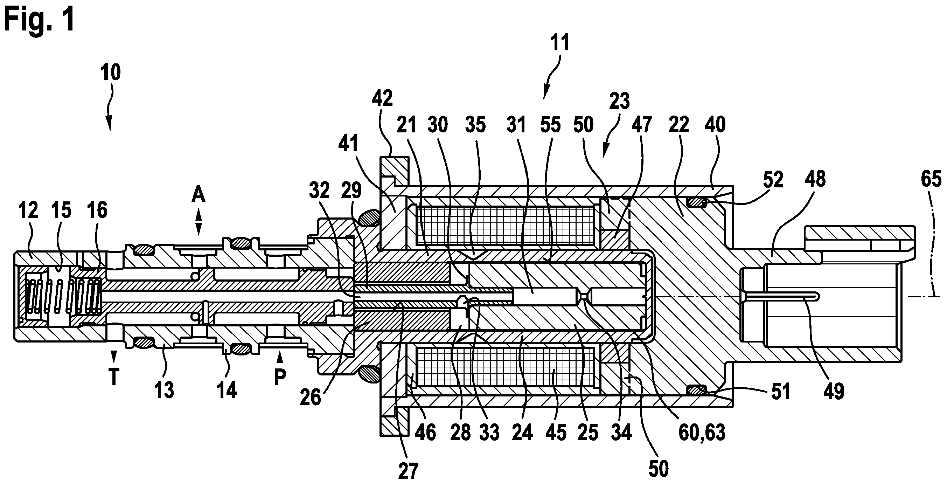

Es zeigen
- Figur 1: einen Längsschnitt durch das als Proportionaldruckregelventil ausgebildete Ausführungsbeispiel,
- Figur 2: eine Draufsicht auf den ebenen Zuschnitt der in als Gleitlager und als amagnetische Trennschicht zu verwendenden Folie,
- Figur 3: eine Ansicht auf die gewickelte Folie in Achsrichtung und
- Figur 4: eine Seitenansicht der gewickelten Folie

Das gezeigte proportional verstellbare Druckregelventil umfasst einen Hydraulikteil 10 und einen Proportionalelektromagneten 11 und ist ein Einbauventil. Es weist eine Ventilbuchse 12 auf, an der durch zwei voneinander axial beabstandete Dichtbunde 13 und 14, drei um die Ventilbuchse herumlaufende hydraulische Anschlüsse, nämlich ein Druckanschluss P, ein Regelanschluss A und ein Tankanschluss T, voneinander getrennt sind. Die hydraulischen Anschlüsse sind über Radialbohrungen mit einer im Innern der Ventilbuchse 12 axial verlaufenden Ventilbohrung 15 fluidisch verbunden, in der ein Regelschieber 16 axial verschiebbar geführt ist und die fluidischen Verbindungen zwischen den hydraulischen Anschlüssen steuert. Der Regelschieber 16 ist ein Differentialkolben mit unterschiedlich großen Stirnseiten. Diese werden über eine Verbohrung im Regelschieber 16 von dem am Regelanschluss A anstehenden Druck beaufschlagt, wobei durch diesen Druck aufgrund der Größendifferenz zwischen den Stirnseiten am Regelschieber 16 eine Kraft erzeugt wird, die den Regelschieber derart zu verschieben sucht, dass der Regelanschluss A mit dem Tankanschluss T verbunden ist. In die gleiche Richtung wirkt auf den Regelschieber 16 eine Schraubendruckfeder, so das, wenn keine anderen Kräfte am Regelschieber angreifen, der Regelanschluss A mit dem Tankanschluss T verbunden ist.

Der Proportionalelektromagnet 11, mit dem eine von der Höhe des durch die Magnetspule fließenden elektrischen Stromes abhängige Kraft auf den Regelschieber ausgeübt werden kann, weist als Baugruppen ein Polrohr 21, einen Spulenkörper 22 und ein Magnetgehäuse 23 auf.

Die Ventilbuchse ist mit dem Polrohr 21 verbördelt und damit fest verbunden.

Das Polrohr 21 ist zweiteilig aus einer becherförmigen Führungshülse 24, die zu der Ventilbuchse 10 und zum Regelschieber 16 hin offen ist und in der auf einem Führungsdurchmesser ein Magnetanker 25 geführt ist, und einem Verschlussteil 26 aufgebaut, das eine zentrale Axialbohrung 27 aufweist und mit dem die Führungshülse 24 bis auf die Axialbohrung 27 zur Ventilbuchse und zum Ventilschieber verschlossen ist. Auf diese Weise ist ein Hohlraum 28 entstanden, in dem sich der Magnetanker 25 befindet und der in axialer Richtung größer ist als die Länge des Magnetankers, so dass eine Bewegung des Magnetankers möglich ist.

Durch die Axialbohrung 27 erstreckt sich ein Betätigungsstößel 29, der bis zur Anlage eines an ihm ausgeformten Kragens 30 in eine zentrale Axialbohrung 31 des Magnetankers 25 eingepresst ist, dessen Durchmesser kleiner ist als der Durchmesser der Axialbohrung 27 und der selbst eine durchgehende Axialbohrung 32 aufweist. Der Betätigungsstößel 29 liegt am Regelschieber 16 an, wobei seine Axialbohrung 32 eine durchgehende Axialbohrung im Regelschieber 16 fortsetzt, in der der Regeldruck ansteht. Über eine Radialbohrung 33 ist die Axialbohrung 32 im Betätigungsstößel 29 mit dem vor der dem Verschlussteil 26 zugekehrten Stirnseite des Magnetankers befindlichen Teilraum des Hohlraums 28 fluidisch verbunden. Die Axialbohrung 31 ist Teil eines durch den Magnetanker 25 hindurchführenden Fluidpfades, in dem eine Dämpfungsdrossel 34 ausgebildet ist.

Somit sind die sich vor den beiden Stirnseiten des Magnetankers 25 befindlichen Teilräume des Hohlraums 28 fluidisch miteinander und mit einem Teil der Ventilbohrung 15 fluidisch verbunden, so dass bei einer Bewegung des Magnetankers 25 und der dadurch bedingten wechselseitigen Volumenänderung der Teilräume des Hohlraums 28 sowie die durch das verschieden weite Eintauchen des Betätigungsstößels 29 in den Hohlraum 28 bedingte Änderung des freien Volumens des Hohlraums 28 Druckmittelfluss zwischen den beiden Teilräumen sowie von und zu der Ventilbohrung 15 stattfinden kann. Aufgrund der aufgezeigten fluidischen Verbindungen steht in dem Hohlraum 28 der am Regelanschluss A eingeregelte Regeldruck an.

Das Polrohr 21 ist mit einer V-förmigen äußeren Eindrehung 35 versehen, durch die am Polrohr ein Bereich hohen magnetischen Widerstands ausgebildet ist. Dort gerät das aus einem ferromagnetischen Werkstoff bestehende Polrohr frühzeitig in Sättigung, so dass der magnetische Kreis zwangsläufig über den Magnetanker 25 geschlossen wird.

Das Magnetgehäuse 23 ist zweiteilig aufgebaut und besteht aus einer Gehäusehülse 40 und einer Polscheibe 41, die sich am einen Ende der Gehäusehülse 40 befindet und mit der das Magnetgehäuse 23 auf das Polrohr 21 aufgepresst ist. Mit einem Flansch 42, der einen äußeren Bund der Gehäusehülse 40 übergreift, kann das Einbauventil an einem Ventilblock befestigt werden.

Der Spulenkörper 22 umfasst eine Wicklung 45, die auf einen Wicklungsträger 46 aus Kunststoff aufgewickelt ist, eine Polscheibe 47 und weiteres Kunststoffmaterial, mit dem die Wicklung 45 und die Polscheibe 47 umspritzt sind und an dem ein Stecker 48 mit elektrischen Steckkontakten 49 ausgebildet ist. In der Polscheibe 47 befinden sich zwei radial offene Durchbrüche 50, durch die die beiden Enden der Wicklung 45 zu den beiden Steckkontakten 48 geführt sind und die beim Umspritzen von Wicklung und Polscheibe mit Kunststoffmaterial gefüllt worden sind. Somit wird durch das Umspritzen der Wicklung und der Polscheibe der Spulenkörper als eine Einheit gebildet. Außerhalb der Durchbrüche reicht die Polscheibe 47 bis an die Gehäusehülse 40 heran. Auf der der Wicklung 45 abgewandten Seite der Polscheibe 47 ist in den Kunststoff eine Ringnut 51 eingebracht, in der sich ein Dichtring 52 befindet, der innen an der Gehäusehülse 40 anliegt.

Der Magnetanker 25 ist in dem Polrohr 21 bauchgelagert. Das bedeutet, dass anders als bei einer Stangenlagerung, bei der ein Magnetanker mit Hilfe einer axial durch ihn hindurchgehenden oder einseitig axial abstehenden Stange gelagert ist, seine Mantelfläche 55 die Lagerfläche ist.

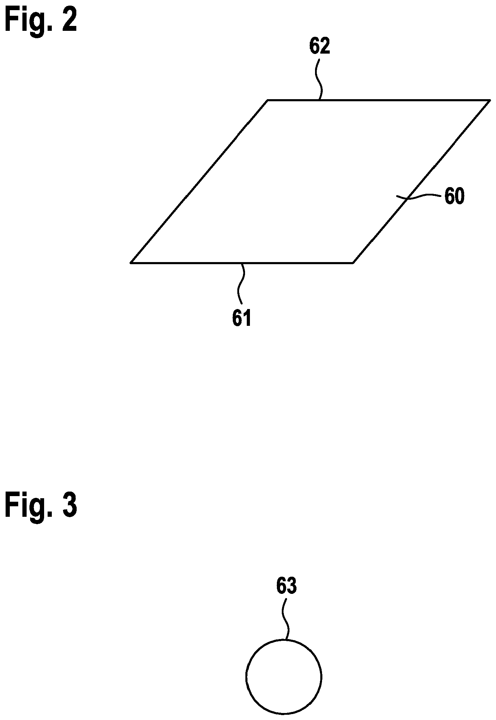

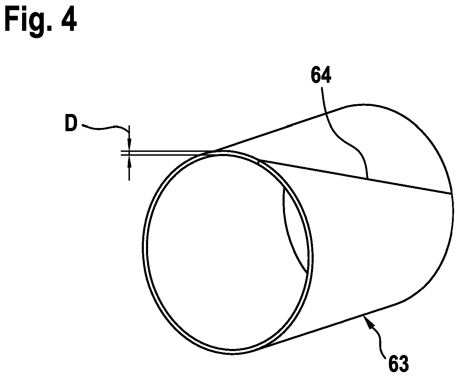

Um am Außenumfang des Magnetankers 25 eine amagnetische Trennschicht zwischen dem Magnetanker 25 und dem Polrohr 21 zu haben und um eine Bewegung des Magnetankers 25 behindernde Reibkräfte klein zu halten, ist der Magnetanker 25 mit Hilfe einer Folie 60 gelagert, mit der die Innenumfangswand des Polrohrs 21 im Bereich des Hohlraums 28 ausgekleidet ist. Die Folie 60 ist aus einem amagnetischen Edelstahl und hat eine Stärke von etwa 30 Mikrometer, die in Figur 4 mit dem Bezugszeichen D gekennzeichnet ist. Die Folie 60 wird in einem ebenen Zustand zugeschnitten, dann zu einem Tubus gerollt und in das Polrohr 21 eingeschoben. Das Besondere dabei ist, das die Folie als Parallelogramm zugeschnitten ist, wie dies aus Figur 2 ersichtlich ist. Die beiden spitzen Winkel des Parallelogramms betragen vorliegend etwa 50 Grad. Die eine Seitenlänge des Parallelogramms, zum Beispiel die Länge der Seiten 61 und 62 ist gleich dem Umfang des Hohlraums 28. Die Höhe des Parallelogramms zu den Seiten 61 und 62 ist gleich der axialen Erstreckung des Hohlraums 28. Wird nun der ebene Zuschnitt gemäß Figur 2 parallel zu den Seiten 61 und 62 ohne Überlappung zu einer Hülsenform 63 aufgerollt, so ergibt sich ein Kreiszylinder mit einer Stoßfuge 64 (siehe Figur 4), die spiralförmig bezüglich einer Mittelachse 65 des Polrohrs, also abweichend von einer parallel zur Mittelachse 65 des Polrohrs verlaufenden Mantellinie des Magnetankers verläuft. Aufgrund einer derartig verlaufenden Stoßfuge läuft die aufgerollte Folie an der Stoßfuge nicht dachförmig aus, sondern liegt auch an der Stoßfuge vollkommen am Polrohr 21 an, so dass auf den Magnetanker 25 nur geringe Querkräfte wirken.

Die Folie ist sehr dünn, so dass der "Luftspalt" zwischen dem Magnetanker 25 und dem Polrohr 21 sehr eng und der Elektromagnet sehr effizient ist.

Auch als Schaltmagnete arbeitende Elektromagnete können erfindungsgemäß ausgebildet sein.

### Bezugszeichenliste

- 10: Hydraulikteil
- 11: Proportionalelektromagneten
- 12: Ventilbuchse
- 13: Dichtbund an 12
- 14: Dichtbund an 12
- 15: Ventilbohrung
- 16: Regelschieber
- 21: Polrohr
- 22: Spulenkörper
- 23: Magnetgehäuse
- 24: Führungshülse von 21
- 25: Magnetanker
- 26: Verschlussteil von 21
- 27: Axialbohrung in 26
- 28: Hohlraum in 24
- 29: Betätigungsstößel
- 30: Kragen an 29
- 31: Axialbohrung in 25
- 32: Axialbohrung in 29
- 33: Radialbohrung in 29
- 34: Dämpfungsdrossel
- 35: äußere Eindrehung an 21
- 40: Gehäusehülse von 23
- 41: Polscheibe von 23
- 42: Flansch
- 45: Wicklung
- 46: Wicklungsträger
- 47: Polscheibe
- 48: Stecker
- 49: elektrische Steckkontakte
- 50: Durchbrüche in 47
- 51: Ringnut
- 52: Dichtring
- 55: Mantelfläche von 25
- 60: Folie
- 61: Seite eines Parallelogramms
- 62: Seite eines Parallelogramms
- 63: Hülsenform von 60
- 64: Stoßfuge

- P: Druckanschluss
- A: Regelanschluss
- T: Tankanschluss
- D: Folienstärke

## Patentansprüche

1. Elektromagnet mit einem Polrohr (21) und mit einem in einem Hohlraum (28) des Polrohrs (21) mit seiner Mantelfläche (55) gelagerten Magnetanker (25), der in Richtung einer Mittelachse (65) des Polrohrs (21) linear bewegbar ist, wobei zwischen dem Polrohr (21) und dem Magnetanker (25) eine eine Stoßfuge (64) aufweisende, amagnetische Folie (60) zur Lagerung des Magnetankers (25) eingefügt ist,
wobei die Stoßfuge (64) an der Folie (60) abweichend von einer parallel zur Mittelachse (65) des Polrohrs (21) verlaufenden Mantellinie des Magnetankers (25) verläuft, wobei die Folie (60) aus einem amagnetischen Metall besteht,
**dadurch gekennzeichnet, dass** die Stärke der Folie (60) zwischen 10 Mikrometer und 50 Mikrometer beträgt.

2. Elektromagnet nach Patentanspruch 1, wobei die Stoßfuge (64) spiralförmig bezüglich der Mittelachse (65) des Polrohrs (21) verläuft.

3. Elektromagnet nach Patentanspruch 1 oder 2, wobei die Folie (60) abgewickelt die Form eines Parallelogramms mit zwei gegenüberliegenden spitzen Winkeln und zwei gegenüberliegenden stumpfen Winkeln hat und wobei der spitze Winkel zwischen 35 Grad und 60 Grad beträgt.

4. Elektromagnet nach einem vorhergehenden Patentanspruch , wobei die Folie (60) aus einem amagnetischen Stahl besteht.

5. Elektromagnet nach Patentanspruch 4, wobei die Folie (60) aus einem nichtrostenden amagnetischen Edelstahl besteht.

6. Elektromagnet nach einem vorhergehenden Patentanspruch, wobei die Stärke der Folie (60) etwa 30 Mikrometer beträgt.

7. Elektromagnet nach einem vorhergehenden Patentanspruch, wobei er ein Proportionalelektromagnet (11) ist.

8. Hydraulisches Ventil mit einem Hydraulikteil (10) und mit einem Elektromagneten (11) nach einem vorhergehenden Patentanspruch, wobei der Hohlraum (28) im Polrohr (21) mit dem Hydraulikteil (10) fluidisch in Verbindung steht und mit Hydrauliköl gefüllt ist.

## Claims

1. Electromagnet having a pole tube (21) and having an armature (25) which by way of the shell face (55) thereof is mounted in a cavity (28) of the pole tube (21) and is movable in a linear manner in the direction of a central axis (65) of the pole tube (21), wherein a non-magnetic foil (60) which for mounting the armature (25) has a butt joint (64) and is disposed between the pole tube (21) and the armature (25), wherein the butt joint (64) on the foil (60) runs so as to deviate from a surface line of the armature (25) which runs parallel to the central axis (65) of the pole tube (21), wherein the foil (60) is composed of a non-magnetic metal, **characterized in that** the thickness of the foil (60) is between 10 micrometres and 50 micrometres.

2. Electromagnet according to Patent Claim 1, wherein the butt joint (64) runs helically in terms of the central axis (65) of the pole tube (21).

3. Electromagnet according to Patent Claim 1 or 2, wherein the foil (60) in a developed view has the shape of a parallelogram having two mutually opposite acute angles and two mutually opposite obtuse angles, and wherein the acute angle is between 35 degrees and 60 degrees.

4. Electromagnet according to one of the preceding patent claims, wherein the foil (60) is composed of a non-magnetic steel.

5. Electromagnet according to Patent Claim 4, wherein the foil (60) is composed of a non-corroding non-magnetic high-grade steel.

6. Electromagnet according to one of the preceding patent claims, wherein the thickness of the foil (60) is approximately 30 micrometres.

7. Electromagnet according to one of the preceding patent claims, wherein said electromagnet is a proportional electromagnet (11).

8. Hydraulic valve having a hydraulic part (10) and having an electromagnet (11) according to one of the preceding claims, wherein the cavity (28) in the pole tube (21) is fluidically connected to the hydraulic part (10) and is filled with hydraulic fluid.

## Revendications

1. Électroaimant comprenant un tube polaire (21) et comprenant un induit magnétique (25) monté dans une cavité (28) du tube polaire (21) avec sa surface d'enveloppe (55), qui peut être déplacé linéairement dans la direction d'un axe central (65) du tube polaire (21), une feuille amagnétique (60) présentant un joint vif (64) étant insérée entre le tube polaire (21) et l'induit magnétique (25) pour le montage de l'induit magnétique (25),
le joint vif (64) s'étendant sur la feuille (60) en s'écartant d'une ligne d'enveloppe de l'induit magnétique (25) parallèle à l'axe central (65) du tube polaire (21), la feuille (60) étant constituée d'un métal amagnétique, **caractérisé en ce que** l'épaisseur de la feuille (60) est comprise entre 10 micromètres et 50 micromètres.

2. Électroaimant selon la revendication 1, dans lequel le joint vif (64) s'étend en spirale par rapport à l'axe central (65) du tube polaire (21).

3. Électroaimant selon la revendication 1 ou 2, dans lequel la feuille (60), déroulée, a la forme d'un parallélogramme comprenant deux angles aigus opposés et deux angles obtus opposés, et dans lequel l'angle aigu est compris entre 35 degrés et 60 degrés.

4. Électroaimant selon une revendication précédente, dans lequel la feuille (60) est constituée d'un acier amagnétique.

5. Électroaimant selon la revendication 4, dans lequel la feuille (60) est constituée d'un acier inoxydable amagnétique.

6. Électroaimant selon une revendication précédente, dans lequel l'épaisseur de la feuille (60) est d'environ 30 micromètres.

7. Électroaimant selon une revendication précédente, celui-ci étant un électroaimant proportionnel (11).

8. Vanne hydraulique comprenant une partie hydraulique (10) et comprenant un électroaimant (11) selon une revendication précédente, dans laquelle la cavité (28) dans le tube polaire (21) est en liaison fluidique avec la partie hydraulique (10) et est remplie d'huile hydraulique.
